# EUROPÄISCHE PATENTANMELDUNG

(11) **EP 1 429 024 A2**
(43) Veröffentlichungstag der Anmeldung: **16.06.2004**
(21) Anmeldenummer: 03028096.0
(22) Anmeldetag: 09.12.2003
(51) Int. Cl.: F03D 1/00

(54) **Caisson auf Pfählen als off-shore-Gründung für Windkraftanlagen**

(30) Priorität: 11.12.2002 DE 10257724; 22.01.2003 DE 10302294
(71) Anmelder: ED. ZÜBLIN AG, D-70567 Stuttgart (DE)
(72) Erfinder: von Lübtow, Boris, 70569 Stuttgart (DE); Voigt, Thomas, Dr., 70794 Filderstadt (DE); Brosig, Stefan, Dr., 70563 Stuttgart (DE)

(57) **Zusammenfassung**

Die Erfindung sieht vor, als Gründung für einen Mast oder Pfahl (5) einer Windkraftanlage einen unterhalb der Wasseroberfläche befindlichen Caisson (4) zu verwenden, der auf Pfählen(3) im Untergrund ruht, mit denen er zug- und druckfest verbunden ist. Durch die auf Druck und Zug beanspruchbaren Pfähle (3) ist es möglich, die Größe und die Masse des Caissons (4) deutlich geringer zu halten als bei einem Caisson (4), der direkt auf dem Grund (2) oder auf einer dort ausgebrachten Kiesschüttung aufsitzt. Weiterhin besteht bei einer Befestigung des Caissons (4) auf Pfählen (3) nicht die Gefahr einer Unterspülung durch die Meeresströmung, die zu einem Neigen oder Kippen der gesamten Anlage bei Sturm führen kann. Der Caisson (4) kann für die vorherrschende Meeresströmung stromlinienförmig ausgebildet sein.
In einer Variante (Hybrid-Kraftwerk) weist der Caisson (4) eine hydrodynamisch günstig (strömungsverstärkend) ausgebildete Öffnung auf, in der sich eine Schraube befindet, die vom durchströmenden Wasser angetrieben wird und deren Bewegungsenergie in elektrische Energie umgewandelt wird (Nutzung der Gründung zur Energiegewinnung). Eine andere Variante eines Hybridkraftwerks weist an der Außenseite des Caissons (4) befindliche Vorrichtungen zur Gewinnung von Energie aus Meeresströmungen oder Wellenbewegungen auf.

## Beschreibung

### Technisches Gebiet

Die Erfindung betrifft die Gründung von off-shore Windkraftanlagen.

### Stand der Technik

Es sind als Gründung von Windkraftanlagen der Monopfahl, die Tripod-Gründung und zum Beispiel aus "Wind Energie Aktuell 3/96" die Caisson-Gründung bekannt.
In der DE 10117113 A1 ist in einer umfassenden Darstellung zum Stand der Technik der Gründung von off-shore-Bauwerken für unzureichend tragfähige Böden die Möglichkeit eines pfahlgetragenen Fundaments genannt (Pfahl-Platte-Gründungen). Bei diesen Pfählen handelt es sich um rein druckbelastete Pfähle, die Platte ist an sich als Schwerkraftgründung mit hoher Masse ausgeführt. Auf diesem Fundament wird dann die Windkraftanlage errichtet.

### Aufgabe der Erfindung

Aufgabe der Erfindung ist es, eine Konstruktion für die Gründung von off-shore Windkraftanlagen anzugeben, die mit deutlich geringeren Massen auskommt und einen hohen Grad an Vorfertigung an Land oder auf schwimmenden Einheiten erlaubt.

### Darstellung der Erfindung

Die Aufgabe wird durch die im Kennzeichen des Anspruchs 1 angegebenen Merkmale gelöst.
Wesentliches Kennzeichen der Erfindung ist dabei die Verwendung eines wesentlich kleiner oder leichter (weniger als die Hälfte der Masse gegenüber herkömmlicher Ausführung) ausgeführten unterhalb der Wasseroberfläche befindlichen Caissons (4), der zugfest mit auf Zug und Druck belastbaren Pfählen (3) im Untergrund verbunden ist.
Diese Kombination erlaubt einen einfachen Bauverlauf, da zuerst die Pfähle (3) geneigt oder lotrecht ohne Behinderung hergestellt werden können und der Caisson (4) anschließend eingeschwommen, abgesenkt und darauf befestigt wird. Eine aufwendige Einebnung des Untergrundes (2) entfällt. Es entfällt eine Gefährdung durch Unterspülung durch die Meeresströmung, die sonst aufwendig zum Beispiel mittels Schürzen oder Anschüttungen unterbunden werden müßte.

Bei den auf Druck und Zug belasteten Pfählen (3) handelt es sich bevorzugt um bewehrte Beton-Rammpfähle oder bewehrte Düsenstrahl-Pfähle, oder um Stahlpfähle (zum Beispiel Hohl- oder Profilstahl).
Der Caisson (4) weist auf seiner Unterseite bevorzugt Ausnehmungen auf, die als Aufnahme für die Oberteile der Pfähle (3) dienen. Nachdem der Pfahl (3) seinen Platz in der Ausnehmung gefunden hat, wird der verbliebene Raum der Ausnehmung bevorzugt mit einer aushärtenden Substanz ausgefüllt. Zwischen Caisson (4) und Pfahl (3) ist eine zugfeste Ankoppelung, zum Beispiel in Form einer Anschlußbewehrung oder, bei Stahlpfählen, eines Preßmuffenstoßes, vorgesehen.

Der Caisson (4) ruht bevorzugt auf den Pfählen (3) und auf dem Grund, er kann jedoch auch ähnlich einem Pfahlbau über den Meeresboden (2) erhöht sein. Seine Oberkante liegt in der Regel unterhalb der Meeresoberfläche und bevorzugt auch unterhalb des größten auftretenden Wellentals, um Wellenkräfte gering zu halten.
Die Pfähle (3) weisen weiterhin bevorzugt eine Neigung auf, wobei diese Neigung wie auch die Länge der Pfähle (3) im Falle anisotrop wirkender Kräfte (zum Beispiel die durch den langen Hebelarm wirkende Windkraft, Meeresströmung, ...) bei Bedarf auf die maximale Stärke dieser Kräfte optimiert wird. Der Caisson (4) wird darüber hinaus bei Bedarf in seiner Form hydrodynamisch und für Eisgang optimiert, um die durch Wasserströmungen und/oder Eisgang auf ihn ausgeübten Kräfte zu minimieren. Auch diese Maßnahme, in Kombination mit der zugfesten Verankerung (3), erlaubt es, die Masse des Caissons (4) gegenüber herkömmlichen Konstruktionen deutlich zu senken (mindestens um ungefähr den Faktor zwei).
Eine einfache Maßnahme zur hydrodynamischen Verbesserung besteht darin, die der vorherrschenden Meeresströmung bzw. vorherrschenden Richtung des Eisgangs entgegenstehende Fläche zu verringern und Kanten abzurunden.
Die der vorherrschenden Richtung des Eisganges entgegenstehende Fläche kann zudem aus einem widerstandsfähigeren Material gefertigt sein.
Der Caisson (4) kann also bei Bedarf in Richtung der vorherrschenden Meeresströmung eine größere Ausdehnung aufweisen als senkrecht dazu.
Eine solche größere Ausdehnung des Caissons (4) in einer Richtung bedeutet darüber hinaus, daß zusätzlich die Standsicherheit der Anlage in dieser Richtung erhöht ist, weshalb die Dimensionierung oder die Anzahl der Pfähle (3) für die Stabilisierung in dieser Richtung verringert werden kann.

Bei einer solchen anisotropen Dimensionierung des Caissons (4) und der Verteilung der darunter befindlichen Pfähle (3) ist selbstverständlich außer der vorherrschenden Meeresströmung vor allem die durch die Windkraft über den langen Hebelarm des Mastes (5) der Windkraftanlage auf den Caisson (4) ausgeübte Kraft zu berücksichtigen.

In einer speziellen Ausgestaltung einer Windkraftanlage wird als Gründung für die darauf befindliche Windkraftanlage ein Caisson (4) verwendet, der in einem Durchgang in Richtung der vorherrschenden Meeresströmung eine Schraube oder Schaufel enthält, die durch diese Meeresströmung bewegt wird und ihre Bewegungsenergie ähnlich wie der Wind in der darüber befindlichen Windkraftanlage über einen Generator in elektrische Energie umwandelt. Ein solches Hybrid-Kraftwerk liefert Strom auch noch bei Windstille, solange Meeresströmungen vorhanden sind. Die Doppelnutzung der Gründung zur Energiegewinnung und als Fundament für die Windkraftanlage verbilligt die Stromgewinnung.
Alternativ können die durch die Wasserströmung bewegten Anbauten zur Energieerzeugung auch außen am Gründungskörper oder Caisson (4) angebracht werden. Bevorzugt wird hier eine drehbare Anbringung, so daß die Ausrichtung der energieerzeugenden Anbauten der aktuellen maximalen Strömungsrichtung angepaßt werden kann.

Die Figuren verdeutlichen schematisch der Erfindung.

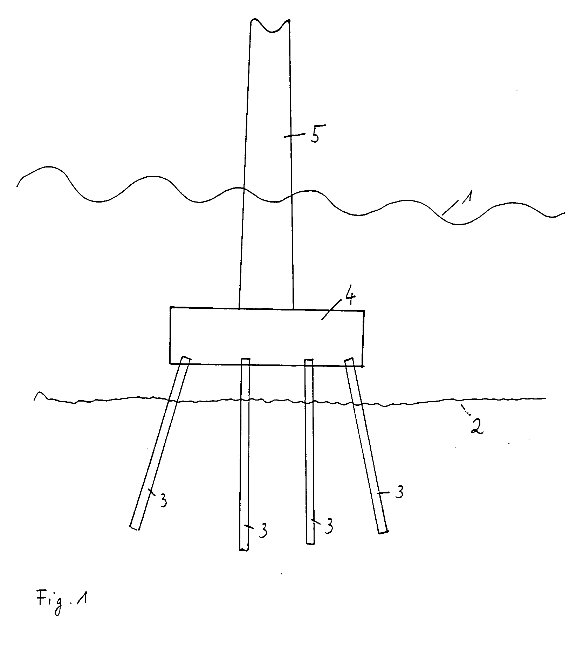

Fig.1 zeigt im Querschnitt eine auf einem erfindungsgemäß verankerten Caisson (4) angeordnete Windkraftanlage.

### Legende

- 1: Wasseroberfläche
- 2: Meeresboden
- 3: zug- und druckfester Pfahl
- 4: Caisson
- 5: Mast der Windkraftanlage

## Patentansprüche

1. Gründung für eine off-shore Windkraftanlage, bestehend aus einem Caisson (4),
**dadurch gekennzeichnet, daß** der Caisson (4) auf im Untergrund eingebundenen Pfählen (3) aufsitzt, die auf Zug und Druck belastbar sind, und daß er mit diesen Pfählen (3) zugfest verbunden ist.

2. Gründung nach Anspruch 1,
**dadurch gekennzeichnet, daß** es sich bei den Pfählen (3) um Bohrpfähle, bewehrte Beton-Rammpfähle, Stahlrammpfähle oder bewehrte Düsenstrahlpfähle handelt.

3. Gründung nach mindestens einem der Ansprüche 1 und 2,
**dadurch gekennzeichnet, daß** mindestens ein Teil der Pfähle (3) geneigt ist.

4. Gründung nach mindestens einem der Ansprüche 1 bis 3,
**dadurch gekennzeichnet, daß** der Caisson (4) mit seiner Unterseite auf dem Meeresboden (2) aufsitzt.

5. Gründung nach mindestens einem der Ansprüche 1 bis 3,
**dadurch gekennzeichnet, daß** der Caisson (4) durch die Pfähle (3) über den Meeresboden (2) erhoben steht.

6. Gründung nach mindestens einem der Ansprüche 1 bis 5,
**dadurch gekennzeichnet, daß** der Caisson (4) in seiner Form auf geringen Wasserwiderstand und Eiswiderstand ausgestaltet ist.

7. Gründung nach mindestens einem der Ansprüche 1 bis 6,
**dadurch gekennzeichnet, daß** der Caisson (4) mindestens eine Ausnehmung aufweist, durch die die vorherrschende Meeresströmung hindurchfließen kann und daß sich in dieser Ausnehmung eine Schraube oder Schaufel befindet, die von der Meeresströmung in Bewegung gesetzt wird, und das deren Bewegungsenergie durch einen Generator in elektrische Energie umgewandelt wird.

8. Gründung nach mindestens einem der Ansprüche 1 bis 6,
**dadurch gekennzeichnet, daß** außen am Gründungselement bzw. dem Caisson (4) Apparaturen angebracht sind, die aus der Wasserströmung oder aus der Wellenbewegung vermittels eines Generators elektrische Energie erzeugen.

9. Gründung nach mindestens einem der Ansprüche 7 oder 8,
**dadurch gekennzeichnet, daß** die energieerzeugenden Anlagen beweglich mit dem Gründungskörper bzw. dem Caisson (4) verbunden sind und so entsprechend der aktuell vorherrschenden Strömungsrichtung optimal ausgerichtet werden können.
